# EUROPEAN PATENT APPLICATION

(11) **EP 4 827 127 A1**
(43) Date of publication of application: **21.10.2026**
(21) Application number: 26169828.6
(22) Date of filing: 31.03.2026
(51) Int. Cl.: H04W 4/40, H04L 9/32, H04L 9/40

(54) **SYSTEM AND METHOD FOR AUTHENTICATING WIRELESS CONNECTION**

(30) Priority: 16.04.2025 IN 202541036808
(71) Applicant: TVS Motor Company Limited, 600006 Chennai (IN)
(72) Inventor: Gudi, Venkata Ramana, 600006 Chennai (IN)
(74) Representative: Patentanwaltskanzlei Matschnig & Forsthuber OG

(57) **Abstract**

The present disclosure provides an authentication system (100) and a method for authenticating a wireless connection between a control unit (104) of a vehicle (102) with at least one external entity (106). The method comprises generating an authentication token by the control unit (104). The authentication token is generated by at least a combination of a control unit (104) ID and a vehicle ID. The method comprises transmitting a connection request by the control unit (104) to wirelessly connect with the at least one external entity (106) along with the generated authentication token. Herein, the authentication is encrypted prior to the transmission. The method comprises authenticating the connection request by an authentication server (108). The authentication server (108) decrypts the received authentication token. The method comprises establishing the wireless connection by the authentication server (108) between the control unit (104) and the external entity (106) when the authentication is successful.

## Description

### TECHNICAL FIELD

The present subject matter generally relates to automotive industry. More particularly, but not exclusively to, a method and a system for authenticating a wireless connection between a control unit of a vehicle with at least one external entity.

### BACKGROUND

Technical advancements in the automotive industry have led to an integration of highly sophisticated systems and technologies in modern vehicles, transforming them into smart, connected devices. With an introduction of telematics systems, vehicles are now capable of transmitting and receiving data in real-time, enabling remote diagnostics, navigation, infotainment, and vehicle-to-everything (V2X) communication. Such advancements have significantly enhanced a user experience, a vehicle performance, and an overall safety.

It may be noted that an increased connectivity of the vehicles has also introduced a variety of security challenges. As vehicles become more interconnected with external platforms, including Original Equipment Manufacturer (OEM) proprietary systems, third-party services, and cloud infrastructures, the vehicles become vulnerable to potential cyber threats. The integration of telematics units, which act as central communication hubs between vehicles and external platforms, has created new opportunities for cyberattacks.

Hackers can exploit the telematics systems to gain unauthorized access to critical vehicle functions, including global positioning system (GPS) tracking, vehicle status information, and other proprietary data. Additionally, malicious actors can intercept or manipulate a communication flow between the vehicle's telematics unit and OEM platforms, posing a serious risk to data privacy and vehicle safety. An ability to replace the telematics unit with a hacked device further exacerbates the aforesaid concerns.

Moreover, a storage of sensitive credentials, such as application programming interface (API) keys and authentication tokens, within the telematics units presents another vulnerability where in case the API keys and the authentication tokens are stolen or compromised, the hackers can use the stolen API keys and the authentication tokens to connect to external devices or platforms, gaining unauthorized access to critical information and systems.

Thus, there is a need in the art for a system and a method, which addresses at least the aforementioned problems and other problems of known art.

### SUMMARY OF THE DISCLOSURE

According to embodiments illustrated herein, the present disclosure relates to a method and an authentication system for authenticating a wireless connection between a control unit of a vehicle with at least one external entity.

In an aspect, the present disclosure relates to a method for authenticating a wireless connection between a control unit of a vehicle with at least one external entity. The method comprising the step of generating an authentication token by the control unit, wherein the authentication token being generated by at least a combination of a control unit ID and a vehicle ID. The method further comprising transmitting a connection request by the control unit to wirelessly connect with the at least one external entity along with the generated authentication token, wherein the authentication being encrypted prior to the transmission. The method further comprises authenticating the connection request by an authentication server, wherein the authentication server decrypts the received authentication token. The method further comprises establishing the wireless connection by the authentication server between the control unit and the external entity, based on the authentication being successful.

In another aspect, an authentication system of a vehicle is provided. The authentication system comprises a control unit on the vehicle, the control unit of the vehicle being capable of wireless connecting with at least one external entity. The control unit being configured to generate an authentication token by the control unit, wherein the authentication token being generated by at least a combination of a control unit ID and a vehicle ID. The control unit being configured to transmit a connection request by the control unit to wirelessly connect with at least one external entity along with the generated authentication token, wherein the authentication being encrypted prior to the transmission. The control unit being configured to an authentication server communicably coupled to the external entity. The authentication server being configured to authenticate the connection request by an authentication server, wherein the authentication server decrypts the received authentication token. The authentication server being configured to establish the wireless connection by the authentication server between the control unit and the external entity, based on the authentication being successful.

It is to be understood that both the foregoing general description and the following detailed description are exemplary and explanatory only and are not restrictive of the disclosure, as claimed.

### BRIEF DESCRIPTION OF THE DRAWINGS

The details are described with reference to an embodiment of a vehicle along with the accompanying diagrams. The same numbers are used throughout the drawings to reference similar features and components.
**Figure 1** illustrates a block diagram of an authentication system, in accordance with an embodiment of the present disclosure.
**Figure 2** illustrates a time diagram for wireless connection between a control unit of a vehicle with at least one external entity, in accordance with an embodiment of the present disclosure.
**Figure 3** illustrates a flowchart of a method for wireless connection between a control unit of a vehicle with at least one external entity, in accordance with an embodiment of the present disclosure.

### DETAILED DESCRIPTION

Exemplary embodiments are described with reference to the accompanying drawings. Wherever convenient, the same reference numbers are used throughout the drawings to refer to the same or like parts. While examples and features of disclosed principles are described herein, modifications, adaptations, and other implementations are possible without departing from the spirit and scope of the disclosed embodiments. It is intended that the following detailed description be considered as exemplary only, with the true scope and spirit being indicated by the following claims.

The terms "an embodiment", "embodiment", "embodiments", "the embodiment", "the embodiments", "one or more embodiments", "some embodiments", and "one embodiment" mean "one or more (but not all) embodiments of the disclosure(s)" unless expressly specified otherwise. The terms "including", "comprising", "having" and variations thereof mean "including but not limited to", unless expressly specified otherwise. The terms "a", "an" and "the" mean "one or more", unless expressly specified otherwise.

In an aspect, the present disclosure relates to a method for generating an authentication token for a telematics control unit (TCU) of a vehicle. The method comprises receiving, by a processor, a key associated with an application. The method further comprises generating, by the processor, a first random number based on the received key. The method further comprises generating, by the processor, a second random number based on an identification number associated with the TCU. The method further comprises determining, by the processor, a vehicle identification number based on the generated first random number and the generated first random number. The method comprises determining, by the processor, a hash based on the determined vehicle identification number. The method further comprises determining, by the processor, a nonce based on the determined hash. The method comprises determining, by the processor, an authentication token based on the identification number associated with the TCU, the determined hash, the determined nonce, and the received key.

In an aspect, the present disclosure relates to a system for generating an authentication token. The system comprises a telematics control unit (TCU) associated with the vehicle. The system further comprises a server communicably coupled with the TCU. The system further comprises a processor configured to receive a key associated with an application. The processor is configured to generate a first random number based on the received key. The processor is further configured to generate a second random number based on an identification number associated with the TCU. The processor is further configured to determine a vehicle identification number based on the generated first random number and the generated first random number. The processor is further configured to determine a hash based on the determined vehicle identification number. The processor is further configured to determine a nonce based on the determined hash. The processor is further configured to determine an authentication token based on the identification number associated with the TCU, the determined hash, the determined nonce, and the received key.

A primary objective of the disclosed system and the method is to enhance a security of connected vehicles, particularly focusing on a protection of telematics systems and their communication with external platforms, such as OEM proprietary systems. Specifically, the disclosed system and the method aims to address vulnerabilities associated with unauthorized accesses, device impersonations, and credential thefts that may compromise vehicle data, privacy, and safety.

The embodiments of the present disclosure will now be described in detail with reference to a vehicle with the accompanying drawings. However, the present disclosure is not limited to the present embodiments.

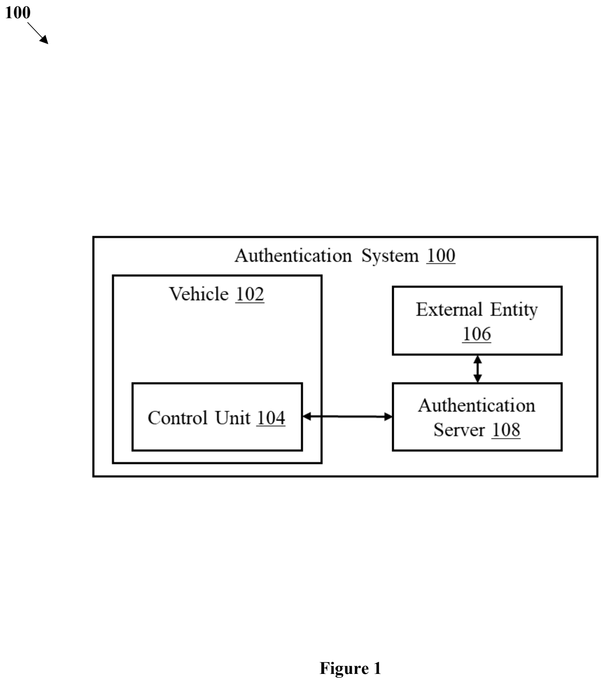

**Figure 1** illustrates a block diagram of an authentication system (100), in accordance with an embodiment of the present disclosure. The authentication system comprises a vehicle (102) comprising a control unit (104), an external entity (106), and an authentication server (108). The vehicle (102) may be a 2-wheeler, a 3-wheeler, a 4-wheeler, and the like.

The control unit (104) may be a telematics control unit (104) having wireless connectivity capabilities and the external entity (106) being an OEM proprietary server, a mobile application, an authentication server (108).The control unit (104) may be an embedded electronic device that enables a collection, a transmission, and a reception of data between the vehicle (102) and external platforms or networks. The control unit (104) typically integrates various communication technologies, such as cellular, GPS, Bluetooth, or Wi-Fi, to facilitate functions like remote diagnostics, location tracking, navigation, vehicle status monitoring, and sometimes over-the-air (OTA) software updates. The control unit (104) is responsible for managing a communication between internal systems (e.g., engine control unit, safety systems) of the vehicle and external platforms, which could include vehicle manufacturer's servers, mobile apps, or third-party services. The control unit (104) may also include a central processing unit (CPU) or microcontroller that is embedded within vehicle's electronic systems. The control unit (104) acts as a brain of onboard electronics of the vehicle (102), processing and controlling data from various sensors and systems. The control unit (104) receives inputs from sensors (e.g., throttle position, engine temperature) and controls engine performance, ensuring optimal fuel efficiency and emissions. The control unit (104) safety features like anti-lock braking systems (ABS), traction control, or stability control, ensuring the vehicle operates safely under different conditions. In modern vehicle (102) integrated with the TCU (104), the control unit (104) handles communication with external platforms, like GPS navigation or remote diagnostics, by managing data transmission to and from the control unit (104). The control unit (104) of the vehicle (102) may be capable of wireless connecting with at least one external entity (106).

The authentication server (108) refers to a centralized system or platform that stores, processes, and manages data exchanged between the TCU (104) and external networks or devices. The authentication server (108) typically communicates with the TCU (104) through wireless networks (e.g., cellular, Wi-Fi, or Bluetooth) and is responsible for receiving data from the TCU (104), such as vehicle status, location, and diagnostic information, and providing responses or commands back to the TCU (104), such as updates, alerts, or configuration changes. The authentication server (108) may be operated by a vehicle manufacturer or a third-party service provider, and may play a key role in remote diagnostics, over-the-air (OTA) updates, location tracking, and other connected services. Further, the authentication server (108) serves as a backend infrastructure that facilitates an exchange of information between the TCU (104) and external platforms, ensuring a smooth operation of connected vehicle services. The authentication server (108) may be communicably coupled to the external entity (106)

The control unit (104) may be configured to generate an authentication token by the control unit (104). Herein, the authentication token may be generated by at least a combination of a control unit identification (ID) and a vehicle ID.

In an embodiment, the control unit (104) may randomize byte selection of a predetermined key. Herein, the predetermined key being received by the control unit (104) during a production phase. The control unit (104) may randomize selection of the control unit (104) ID. The control unit (104) may generate the vehicle ID based on the randomized bytes selected of the predetermined key and the control unit ID.

The predetermined key may be a pre-shared key that may be stored in a secured location. In an example, a size of the predetermined key may be of 16 bytes. The control unit (104) may generate a first random number based on the received predetermined key. The first random number may be determined by selecting 8 bytes from the predetermined key from a counter value. Initially, the counter value may be 1 and may be incremented after every attempt to determine the first random number. The control unit (104) may generate a second random number based on the control unit ID. The control unit ID may be an international mobile equipment identity (IMEI) number of the control unit (104). The control unit (104) may select last seven characters from the control unit ID to determine the second random number. Thereafter, the control unit (104) may determine the vehicle ID by combining the second random number, the counter value, and the first random number.

Thereafter, the control unit (104) may generate a hash value for the determined vehicle. In an example, the hash value for the generated vehicle ID may be determined using at least one of MD5, SHA-1, SHA-256. In an example, the SHA-256 may be applied on the generated vehicle ID to determine the hash value of 32 bytes.

The control unit (104) may be configured to transmit a connection request by the control unit (104) to wirelessly connect with the at least one external entity (106) along with the generated authentication token, wherein the authentication being encrypted prior to the transmission. Upon determination of the hash value, the control unit (104) may determine encrypt the predetermined key. In an embodiment, the encryption may be performed based on at least one of advanced encryption standard (AES), data encryption standard (DES), triple data encryption standard (3DES), and Blowfish. In an example, the control unit ID may be combined with last 9 bytes of the determined hash to determine a value to encrypt. Thereafter, the AES algorithm may be applied on value to encrypt in GCM using a Nonce value and the predetermined key. The nonce value may be determined by selecting twelve bytes from a position indicated by the counter value from the determined hash. Upon application of the AES algorithm an encrypted value may be determined. In an embodiment, along with the encrypted value the control unit (104) may transmit a security tag to the authentication server (108).

The authentication server (108) may be configured to authenticate the connection request. The authentication server (108) may also receive the authentication token and the security tag from the control unit (104). The authentication server (108) may also generate an intermediary authentication token and an intermediary security tag like generating the authentication token and the security tag transmitted by the control unit (104). Thereafter, the intermediary security tag may be compared to the security tag transmitted by the control unit (104). The authentication server (108) may compare the intermediary authentication token with the authentication token transmitted by the control unit (104).

In case the intermediary security tag is same as the security tag transmitted by the control unit (104) and thee the intermediary authentication token is same as the authentication token transmitted by the control unit (104) then the authentication server (108) may determine the authentication as successful else the authentication server (108) may determine the authentication as unsuccessful. When the authentication is successful the authentication server (108) may accept the connection request else the authentication server (108) may reject the connection request.

The authentication server (108) decrypts the received authentication token. Thereafter, the authentication server (108) may establish the wireless connection by the authentication server (108) between the control unit (104) and the external entity (106), based on the authentication being successful. In an embodiment, the authentication server (108) may reject the connection request when the authentication is not successful. Herein, the authentication being one of successful and unsuccessful being based on decrypting the authentication token and generating the predetermined key and control unit (104) ID of the control unit (104) from the authentication token. In an embodiment, on establishing connection between the control unit (104) and the external entity (106), the control unit (104) may be capable of receiving a digital certificate from the external entity (106), receiving over the air (OTA) updates from the external entity (106), transmitting vehicle (102) parameters to ethe external entity (106) to alert the user of the vehicle (102).

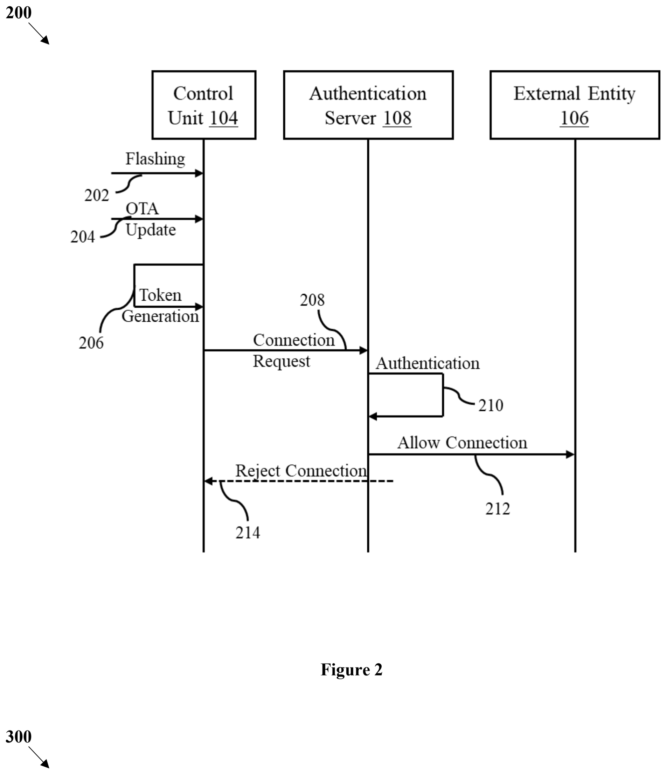

**Figure 2** illustrates a time diagram (200) for wireless connection between a control unit of a vehicle with at least one external entity, in accordance with an embodiment of the present disclosure. The time diagram (200) comprises the control unit (104), the external entity (106), and the authentication server (108). At 202, the control unit (104) may receive a request for flashing a software application. At 204, the control unit (104) receive a request for over the air (OTA) update of the software application. At 206, the authentication token may be generated. At 208, the control unit (104) may transmit a connection request along with the authentication token to the authentication server (108). At 210, the authentication server (108) may authenticate the connection request. The authentication may be either successful or unsuccessful. In case the authentication is successful then the 212 is performed. Herein, the authentication server (108) may enable connection to the external entity (106). The authentication server (108) may decrypt the authentication token and transmit the predetermined key to the external entity (106). In case the authentication is successful then the 214 is performed. Herein, the authentication server (108) may reject the connection request.

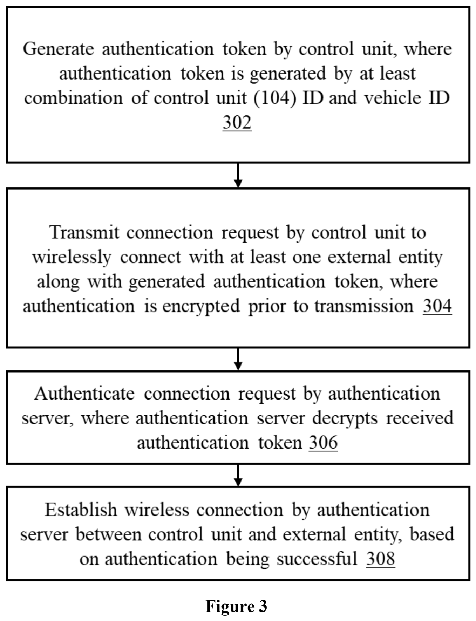

**Figure 3** illustrates a flowchart (300) of a method for wireless connection between a control unit of a vehicle with at least one external entity, in accordance with an embodiment of the present disclosure.

At 302, the control unit (104) is configured to generate an authentication token by the control unit (104). Herein the authentication token being generated by at least a combination of a control unit ID and a vehicle ID.

At 304, the control unit (104) is configured to transmit a connection request by the control unit (104) to wirelessly connect with the at least one external entity (106) along with the generated authentication token, wherein the authentication being encrypted prior to the transmission.

At 306, the authentication server (108) is configured to authenticate the connection request by an authentication server (108). Herein the authentication server (108) decrypts the received authentication token.

At 308, the authentication server (108) is configured to establish the wireless connection by the authentication server (108) between the control unit (104) and the external entity (106), based on the authentication being successful.

The disclosed authentication system and the method prevents unauthorized device replacement by implementing robust authentication protocols, ensuring that only legitimate telematics units can interact with the vehicle's internal systems and external platforms. Thus, the disclosed authentication system and the method significantly reduces the risk of hackers replacing the telematics unit with a malicious device.

The disclosed authentication system and the method utilizes end-to-end encryption and secure communication protocols to protect the data exchanged between the telematics control unit (TCU) and the OEM proprietary platform, making it highly resistant to interception and tampering by unauthorized third parties.

The disclosed authentication system and the method integrates advanced anomaly detection mechanisms that monitor and identify unusual behaviours in the communication between the TCU and external servers, allowing for prompt identification and mitigation of potential cyberattacks. By implementing secure storage techniques, such as encrypted credential storage, the disclosed authentication system and the method ensures that sensitive authentication keys and tokens are protected from unauthorized access or theft, reducing the risk of cybercriminals gaining access to critical external platforms.

The disclosed authentication system and the method allows for seamless and secure over-the-air (OTA) software updates and remote diagnostics. By securing communication and enhancing the integrity of critical vehicle functions, the disclosed authentication system and the method minimizes the risk of cyberattacks that could compromise safety features such as anti-lock braking systems (ABS), engine control, or traction control, thus maintaining the overall safety of the vehicle.

A description of an embodiment with several components in communication with another does not imply that all such components are required, On the contrary, a variety of optional components are described to illustrate the wide variety of possible embodiments of the disclosure.

Finally, the language used in the specification has been principally selected for readability and instructional purposes, and it may not have been selected to delineate or circumscribe the inventive subject matter and is therefore intended that the scope of the disclosure be limited not by this detailed description, but rather by any claims that issue on an application based here on. Accordingly, the embodiments of the present disclosure are intended to be illustrative, but not limiting, of the scope of the disclosure, which is set forth in the following claims.

While various aspects and embodiments have been disclosed herein, other aspects and embodiments will be apparent to those skilled in the art. The various aspects and embodiments disclosed herein are for purposes of illustration and are not intended to be limiting, with the true scope and spirit being indicated by the following claims.

While the present disclosure has been described with reference to certain embodiments, it will be understood by those skilled in the art that various changes may be made, and equivalents may be substituted without departing from the scope of the present disclosure. In addition, many modifications may be made to adapt a particular situation or material to the teachings of the present disclosure without departing from its scope. Therefore, it is intended that the present disclosure not be limited to the particular embodiment disclosed, but that the present disclosure will include all embodiments falling within the scope of the appended claims.

## Claims

1. A method for authenticating a wireless connection between a control unit (104) of a vehicle (102) with at least one external entity (106), the method comprising the steps of:
generating an authentication token by the control unit (104), wherein the authentication token being generated by at least a combination of a control unit (104) ID and a vehicle ID;
transmitting a connection request by the control unit (104) to wirelessly connect with the at least one external entity (106) along with the generated authentication token, wherein the authentication being encrypted prior to the transmission;
authenticating the connection request by an authentication server (108), wherein the authentication server (108) decrypts the received authentication token; and
establishing the wireless connection by the authentication server (108) between the control unit (104) and the external entity (106), based on the authentication being successful.

2. The method as claimed in claim 1 comprising the step of transmitting, by the control unit (104), a security tag along with the authentication token.

3. The method as claimed in claim 1, wherein the step of generating the authentication token comprising the steps of:
randomizing, by the control unit (104), byte selection of a predetermined key, wherein the predetermined key being received by the control unit (104) during a production phase;
randomizing, by the control unit (104), byte selection of the control unit (104) ID; and
generating, by the control unit (104), the vehicle ID based on the randomized bytes selected of the predetermined key and the control unit (104) ID.

4. The method as claimed in claim 1, comprising a step of generating hash value for the generated vehicle ID using at least one of MD5, SHA-1, SHA-256.

5. The method as claimed in claim 1, wherein the encryption of the authentication token being performed based on at least one of advanced encryption standard (AES), data encryption standard (DES), triple data encryption standard (3DES), and Blowfish.

6. The method as claimed in claim 1, wherein the control unit (104) being a telematics control unit (104) having wireless connectivity capabilities and the external entity (106) being an OEM proprietary server, a mobile application, an authentication server (108).

7. The method as claimed in claim 1 comprising the step of rejecting the connection request by the authentication server (108) when the authentication is not successful, wherein the authentication being one of successful and unsuccessful being based on decrypting the authentication token and generating the predetermined key and control unit (104) ID of the control unit (104) from the authentication token.

8. The method as claimed in claim 1, wherein on establishing connection between the control unit (104) and the external entity (106), the control unit (104) being capable of receiving a digital certificate from the external entity (106), receiving over the air (OTA) updates from the external entity (106), transmitting vehicle (102) parameters to ethe external entity (106) to alert the user of the vehicle (102).

9. An authentication system (100) of a vehicle (102), the authentication system (100) comprising:
a control unit (104) on the vehicle (102), the control unit (104) of the vehicle (102) being capable of wireless connecting with at least one external entity (106), the control unit (104) being configured to:
generate an authentication token by the control unit (104), wherein the authentication token being generated by at least a combination of a control unit (104) ID and a vehicle ID;
transmit a connection request by the control unit (104) to wirelessly connect with the at least one external entity (106) along with the generated authentication token, wherein the authentication being encrypted prior to the transmission; and
an authentication server (108) communicably coupled to the external entity (106), the authentication server (108) being configured to:
authenticate the connection request by an authentication server (108), wherein the authentication server (108) decrypts the received authentication token; and
establish the wireless connection by the authentication server (108) between the control unit (104) and the external entity (106), based on the authentication being successful.

10. The authentication system (100) as claimed in claim 9, wherein the control unit (104) is configured to transmit a security tag along with the authentication token.

11. The authentication system (100) as claimed in claim 9, wherein the control unit (104) is configured to:
randomize byte selection of a predetermined key, wherein the predetermined key being received by the control unit (104) during a production phase;
randomize byte selection of the control unit (104) ID; and
generate vehicle ID based on the randomized bytes selected of the predetermined key and the control unit (104) ID.

12. The authentication system (100) as claimed in claim 9, wherein the control unit (104) is configured to generate a hash value for the generated vehicle ID using at least one of MD5, SHA-1, SHA-256.
